# EUROPEAN PATENT SPECIFICATION

(11) **EP 3 453 961 B1**
(45) Date of publication and mention of the grant of the patent: **30.12.2020**
(21) Application number: 18192938.1
(22) Date of filing: 06.09.2018
(51) Int. Cl.: F23D 14/64, F23D 14/10, F23D 14/58, A47J 37/07

(54) **BURNER TUBE AND VENTURI FOR GAS GRILL**
BRENNERROHR UND LUFTTRICHTER FÜR GASGRILL
TUBE DE BRÛLEUR ET VENTURI POUR GRILL À GAZ

(30) Priority: 12.09.2017 US 201715701452
(43) Date of publication of application: 13.03.2019
(73) Proprietor: Weber-Stephen Products LLC, Palatine IL 60067 (US)
(72) Inventor: ALDEN, J. Michael, Palatine, IL Illinois 60067 (US); SHOEB, Mohammed, Steamwood, IL Illinois 60107 (US); SCHMESKI, Kevin James, Romeoville, IL Illinois 60446 (US); DIAZ, Luis, 20500 Arrasate-Mondragon (ES); MUGICA, Jose Ignacio, 20570 Bergara (ES); ALAVA, Isabel, 20500 Arrasate-Mondragon (ES); ALBIZURI, Inigo, 48392 Muxika (ES)
(74) Representative: FRKelly

(56) References cited:
- EP-A1- 3 156 724
- US-A- 3 990 838
- US-A- 5 423 675

## Description

### FIELD OF THE INVENTION

The present inventions relate to burners and venturis for use in gas appliances such as gas grills. More particularly, the present inventions relate to burner tubes (including tapered burner tubes) having raised gas ports and a smooth interior surface, and/or to venturis that provide smooth and consistent flow of the gas/air mixture along the length of the burner tube adjacent to the gas ports.

### BACKGROUND OF THE INVENTION

Burners and burner tube assemblies, including those used in gas grills, are well known. Most conventional gas grills include burner tube assemblies that provide a plurality of burner tubes, gas valves and a gas distribution manifold. Each burner tube has a length defined by an open end and a closed end and a plurality of outlet ports along the length of the burner tube between the open and closed ends. The open end of the burner tube typically includes an air shutter that is used to adjust the gas and combustion air mixture, as well as a venturi region to increase the velocity of the gas/air mixture in the tube. The open end of the burner tube is connected to the neck of a gas control valve, which is in fluid communication with a gas distribution manifold, which is in fluid communication with a gas source such as a tank.

For cost, manufacturing and other reasons, many conventional burner tubes are constructed from hollow welded circular tubing, often made from stainless steel. A venturi region is typically formed by pinching the tube near the open end of the burner tube. The venturi increases the velocity of the fuel/air mixture from the gas nozzle into the burner tube. An air shutter is also typically provided on the open end of the burner tube to adjust the fuel to air mixture.

Also for cost and other manufacturing reasons, the gas ports of typical burner tubes are punched into the tube from the outside of the tube to the inside, either on the top or sides of the tube. This results in burrs or other obstructions on the inside of the burner tube that can disrupt the flow of the fuel/air mixture and provide poor flame quality. Moreover, the flames produced by such burner tubes typically sit directly on the surface of the burner tube itself. This increases the temperature of the burner tube and can result in increased corrosion and clogging of the ports as well as a shorter life of the burner tube. In addition, many known burner tubes have a substantially uniform cross-section along their length that can result in uneven or inconsistent fuel pressure along the length of the tube. This can also negatively affect flame quality.

Thus, there is a need for improved burner tubes that provide improved flame characteristics and quality and which increase the life of the burner tube. There is also a need for burner tubes that enable smooth fuel/air flow throughout their length, as well as consistent pressure throughout the length of the burner tube. The present inventions solve the above described and other deficiencies and provide new features and advantages over known burner tubes.

There is also a need for improved venturis for use with burner tubes, either alone or in conjunction with the burner tubes of the present inventions. For example, it is possible, due to variation between gas train components, that turbulence can form at the upper portion of the burner tube adjacent to the gas outlet port. This can result in poor flame quality and/or the failure to ignite the gas/air mixture. Thus, there is a need for venturis that direct the turbulent gas/air mixture to the bottom of the burner tube and provide a smooth and consistent flow of the gas/air mixture along the top of the burner tube adjacent to the gas ports. This results in a more stable gas/air delivery system and better flame quality. The present inventions solve the deficiencies of know venturis and provide new features and advantages over known venturis, alone or in conjunction with the burner tubes of the present inventions.

EP 3156724 A1 (D1) relates to burner tubes and burner assemblies especially for use on gas grills. In particular, the application is directed to burner assemblies and burner tubes which are tapered, have raised gas ports and a smooth interior surface EP3156724 A1 is closest prior art for the present invention.

US 5,423,675 A (D2) relates to mixing chambers. In particular, it deals with gas mixing chambers having fans and internal baffles for mixing air and gas for combustion.

US 3,990,838 (D3) relates generally to gas burners. More particularly, this patent is directed to a burner for mixing gas and air in which the body is enclosed and there are two open ends.

### SUMMARY OF THE INVENTION

In general, the burner tubes and venturis of the present inventions are part of burner assemblies used with gas grills. The present inventions preserve the advantages of known burner tubes and venturis and provide new features and advantages, some of which are described below and others which will be apparent to those of ordinary skill in the art.

In accordance with the present inventions, a venturi member for use in a burner tube for a gas grill, the burner tube having a length, a top with gas ports and a bottom is provided. The venturi member includes a front face having a top and a bottom, the front face including an opening to accommodate a neck of a gas valve; a top flange extending rearwardly from the top of the front face and a substantially parallel bottom flange extending rearwardly from the bottom of the front face; a downwardly sloping top constricting flange extending rearwardly from the top flange and an upwardly sloping bottom constricting flange extending rearwardly from the bottom flange, the top constricting flange and bottom constricting flange converging to form a throat area. An upper arcuate portion extending rearwardly from the top constricting flange and a lower arcuate portion extending rearwardly from the bottom constricting flange are also provided.

The venturi member may further include an upper arcuate portion that has a concave shape generally adjacent to the top of the burner tube and/or a lower arcuate portion that has a concave portion and a convex portion generally adjacent to the bottom of the burner tube. In a preferred embodiment, the upper arcuate portion occupies the space where turbulence may form along the top of the burner tube and adjacent to the gas ports. Also in a preferred embodiment, a first turbulence area is created in the concave portion of the lower arcuate portion and a second turbulence area is created adjacent to the end of the convex portion of the lower arcuate portion. The top constricting flange may be arcuate.

A burner assembly for use in a gas grill is also provided. It includes a tapered burner tube having an open end, a closed end and a substantially hollow and smooth interior which is free of burrs or other obstructions. The burner tube includes an upper surface, the upper surface including a plurality of gas ports having a height projecting above the upper surface of the tube and an opening at the top of the height, the opening having a diameter. A venturi member at the open end of the burner tube is also provided, the venturi member including a front face having a top and a bottom, the front face including an opening to accommodate a neck of a gas valve; a top flange extending rearwardly from the top of the front face and a substantially parallel bottom flange extending rearwardly from the bottom of the front face; a downwardly sloping top constricting flange extending rearwardly from the top flange and an upwardly sloping bottom constricting flange extending rearwardly from the bottom flange, the top constricting flange and bottom constricting flange converging to form a throat area; an upper arcuate portion extending rearwardly from the top constricting flange wherein the upper arcuate portion has a concave shape generally adjacent to the top of the burner tube; and, a lower arcuate portion extending rearwardly from the bottom constricting flange wherein the lower arcuate portion has a concave portion and a convex portion generally adjacent to the bottom of the burner tube.

A preferred venturi may further include an upper arcuate portion that occupies the space where turbulence may form at the top of the burner tube adjacent to the gas ports and a first turbulence area is created in the concave portion of the lower arcuate portion and a second turbulence area is created adjacent to the end of the convex portion of the lower arcuate portion..

In a preferred burner tube embodiment, the gas port height of the burner is between approximately 0.0508 centimeters and 0.15748 centimeters (.020 and .062 inches) and the opening diameter is between approximately 0.1905 centimeters and 0.2794 centimeters (.075 and .110 inches). More specifically and preferred, the gas port height is approximately 0.1524 centimeters (.060 inches) and the port diameter is approximately 0.23622 centimeters to 0.25146 centimeters (.093 to .099 inches). In addition and as preferred, the ratio of gas port height to gas port opening diameter is between approximately .640 and .650, and preferably greater than .5.

In a preferred burner tube embodiment, the height of the gas ports is between 0.05080 centimeters and 0.15748 centimeters (.020 and .062 inches) and the area of the gas port opening is between 0.0387096 square centimeters and 0.0516128 square centimeters (.006 and .008 square inches). In a particular preferred embodiment, the height of the gas port is approximately 0.1524 centimeters (.060 inches) and the area of the opening is approximately 0.04516 square centimeters (.007 square inches). Alternatively, the port opening may be generally circular and have a diameter. In such an embodiment, the height of the gas port is between 0.0508 centimeters and 0.15748 centimeters (.020 and .062 inches) and the diameter of the opening is between 0.1905 centimeters and 0.2794 centimeters (.075 and .110 inches). More particularly, the height of the gas port is approximately 0.1524 centimeters (.060 inches) and the diameter of the opening is approximately 0.24892 centimeters (.098 inches). An air shutter that cooperates with the open end of the burner tube and venturi member may also be provided.

Accordingly, it is an object of the present inventions to provide a safe, reliable burner tube that efficiently operates over a wide range of gases and mixtures and a wide range of input pressures.

It is another object of the present inventions to provide a tapered burner tube that enables consistent pressure along the length of the tube.

Still another object of the present inventions is to provide a burner tube having a smooth interior surface that enables laminar fluid flow along the length of the interior of the tube.

Yet another object of the present inventions is to provide raised gas ports that enable better flame characteristics and help maintain a cooler burner tube temperature.

Still yet another object of the present inventions is to manufacture the burner tube by forming the raised gas ports from what will be the inside of the burner tube to what will be the outside of the burner tube so that the interior of the burner tube is smooth and free from burrs of other obstructions.

An additional object of the present inventions is to reduce corrosion and gas port clogging of the burner tube.

Still an additional object of the present inventions is to provide larger gas port openings that provide improved flame characteristics and are less susceptible to corrosion, yet are not prone to backflash or flame pull back into the burner tube when in use.

Yet an additional objection of the present inventions is to enable greater material selection as well as manufacturing and cost advantages.

A further object of the present inventions is to provide a burner tube having improved flame characteristics and less material degradation.

Still yet another object of the present inventions is to provide an improved burner tube having a tapered cross-section, a venturi member and an air shutter that cooperates with the open end of the burner tube to adjust the fuel/air mixture.

Still a further object of the present inventions is to provide an improved venturi member and including one that may function with a burner tube having a non-circular cross-section and which improves flame quality and/or ignition.

Still yet an additional object of the present inventions is to provide an improved venturi member that produces the smooth flow of the gas/air mixture along the top of the burner tube adjacent to the gas outlet ports.

Still yet a further object of the present inventions is to provide an improved venturi member that forces any turbulence in the gas/air mixture to the bottom of the burner tube and away from the gas outlet ports.

Still yet a further object of the present inventions is to provide an improved venturi member that provides smooth flow of the gas/air mixture adjacent to the gas ports of the burner tube and provides a stable flow of the gas/air mixture and which improves flame quality and/or ignition.

### INVENTOR'S DEFINITION OF THE TERMS

The following terms which may be used in the various claims and/or specification of this patent are intended to have their broadest meaning consistent with the requirements of law:
As used herein, "front" or "forward" is used by reference to the front or toward the front of a gas grill which typically includes the control panel, gas control knobs and the like. However, it is understood that the present inventions may be applicable to grills that have side controls and burner tubes that extend from side to side of the grill.

As used herein, "rear" or "rearward" is used by reference to the back or toward the back of a typical gas grill.

As used herein, "air shutter" shall mean the device, typically found at the open end of the burner tube, that cooperates with the open end of the burner tube to permit the adjustment of an opening of the burner tube to control the fuel to combustion air mixture.

As used herein, "ignition system" shall mean devices that are capable of generating sparks to ignite the fuel/air mixture emitted from the outlet ports of a burner tube.

Where alternative meanings are possible, in either the specification or claims, the broadest meaning is intended consistent with the understanding of those of ordinary skill in the art. All words used in the claims are intended to be used in the normal, customary usage of grammar, the trade and the English language.

### BRIEF DESCRIPTION OF THE DRAWINGS

The stated and unstated objects, features and advantages of the present inventions (sometimes used in the singular, but not excluding the plural) will become apparent from the following descriptions and drawings, wherein like reference numerals represent like elements in the various views, and in which:
Figure 1 is a side plan view of a preferred embodiment of a burner tube of the present invention, shown with a preferred air shutter and an alternative embodiment of a venturi member installed and shown with the closed end prior to closure;
Figure 2 is an exploded perspective view of the components of the embodiment of Figure 1 and showing the closed end of the burner tube closed;
Figure 3 is a side plan view of a preferred embodiment of the burner tube of the present invention of Figure 1;
Figure 4 is a top plan view of the preferred burner tube of Figure 3;
Figure 5 is a perspective view of the preferred burner tube of Figure 3 and showing the closed end of the burner tube open;
Figure 6 is a cross-sectional detail view of the preferred raised gas ports of the present invention;
Figure 7 is a top detail plan view of the preferred raised gas ports of the present invention;
Figure 8 is a perspective view of an embodiment of a venturi member of the present invention;
Figure 9 is a perspective view of a preferred air shutter of the present invention;
Figure 10 is a perspective view of a preferred embodiment of a venturi member of the present invention;
Figure 11 is a side view of the preferred embodiment of the venturi member of Figure 10; and,
Figure 12 is a cross-sectional view of portions of a preferred embodiment of the venturi member of the present invention installed in a typical preferred burner tube of the present invention and showing the areas of smooth and turbulent flow of the gas/air mixture.

### DETAILED DESCRIPTION OF PREFERRED EMBODIMENTS

Set forth below is a description of what is currently believed to be the preferred embodiments or best representative examples of the inventions claimed. Future and present alternatives and modifications to the embodiments and preferred embodiments are contemplated. Any alternatives or modifications which make insubstantial changes in function, purpose, structure or result are intended to be covered by the claims of this patent.

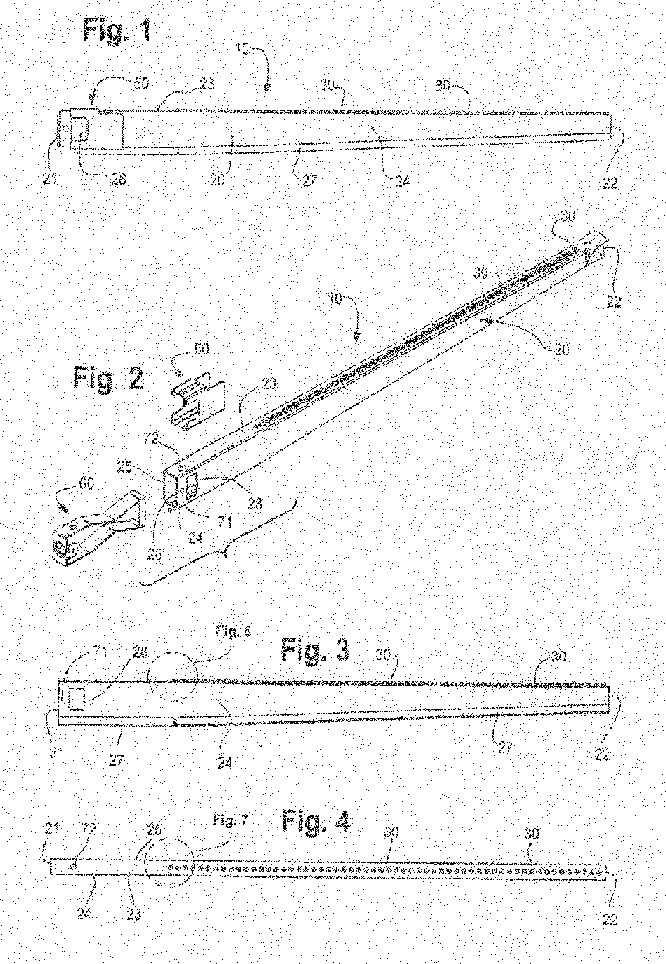

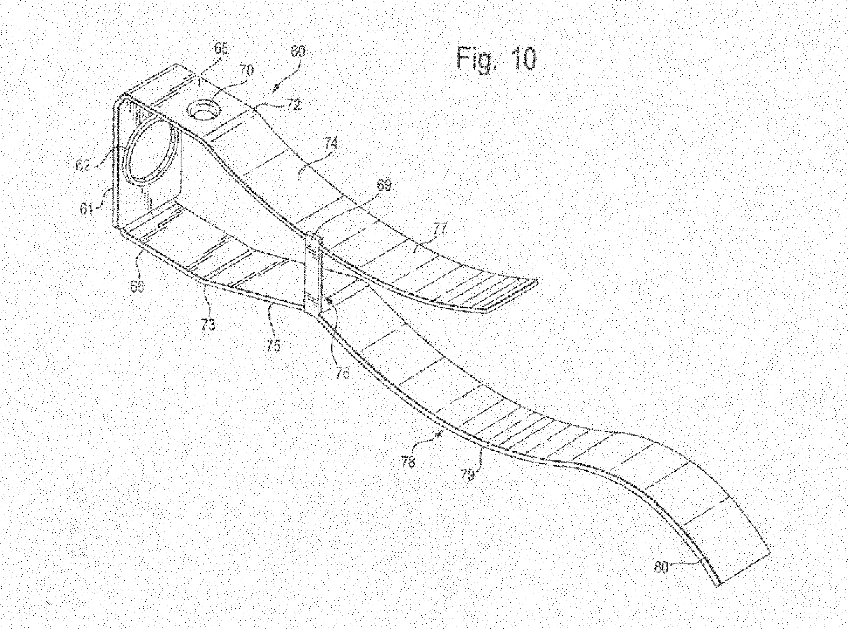

The overall aspects of a burner assembly 10 of the present inventions may be seen by reference to Figures 1 and 2. Burner assembly 10 includes a preferred burner tube 20, an air shutter 50 and a venturi member 60. A preferred embodiment of venturi member 60 is shown in Figures 10-12. Preferred burner tube 20 has a length between an open end 21 and a closed end 22. Open end 21 is typically toward the front of the grill adjacent to a gas valve and gas distribution manifold (not shown) and the closed end 22 is typically secured to the rear of a grill. In most situations, a grill will include a plurality of burner tubes 20 spaced parallel to each other. As will be understood by those of skill in the art, the present inventions are equally applicable to grills having the controls on the side and burner tube 20 extending from side to side of the grill.

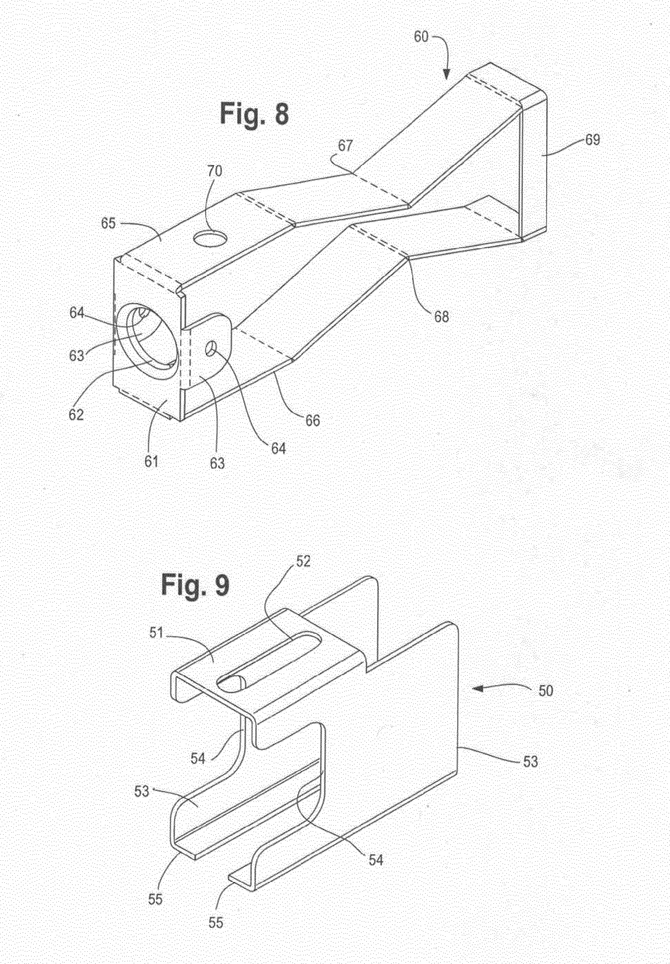

In a preferred embodiment, burner tube 20 has a rectangular cross-sectional shape, with an upper surface 23, two side surfaces 24, 25 and a bottom surface 26 forming a substantially hollow interior. It will be understood by those of skill in the art that the cross-sectional shape of burner tube 20 does not have to be rectangular, as in the preferred embodiment. For example, the cross-sectional shape may be square, circular or oval. It will be further understood that the venturi members 60 of the present inventions may also be used with non-rectangular burner tubes 20. In the preferred embodiment, the burner tube 20 is tapered, i.e., there is a gradual decrease in cross-sectional area along the length from the open end 21 to the closed end 22. This permits a constant pressure of the fuel/air mixture throughout the length of the burner tube 20. A window 28 is provided on each side 24, 25 near the open end 21 of burner tube 20. The window 28, in conjunction with air shutter 50 (Figure 9), is used to adjust the air/fuel mixture as will be understood by those of skill in the art. In addition, a venturi member 60 is provided which accelerates the gas/air mixture introduced into burner tube 20 which helps draw in combustion air, mix the gas and combustion air and equalize pressure and velocity. A preferred venturi member 60 also provides smooth and consistent flow along the length of the tube 20 adjacent to the gas ports 30.

A plurality of gas ports 30 are also provided. In a preferred embodiment, gas ports 30 are equally spread along the top surface 23 of the burner tube 20. It will be understood by those of skill in the art that the number and spacing of ports, as well as the size of the cross-sectional shape of burner tube 20, is calculated or determined based upon the BTU's desired from each burner tube 20. Importantly, the gas ports 30 are formed or extruded from the inside of tube 20 to the outside of tube 20. In this manner, unlike conventional burner tubes which are punched from the outside to the inside of the tube, there are no burrs or obstructions on the inside of the burner tube 20 to obstruct the fuel/air flow or to make that flow turbulent. As a result, desirable blue flame characteristics, among other advantages, are achieved.

In the preferred embodiment and preferred method of its manufacture, burner tube 20 is constructed from a single sheet of appropriately sized and shaped material, typically stainless steel. On what will become the inside of burner tube 20, gas ports 30 are formed or extruded on what will be the top surface 23. Once the ports 30 are formed from the inside to the outside, the sheet of material is then folded to form the upper 23 and side surfaces 24, 25, as well as bottom surface 26. A tab 27 is provided and welded together so that a substantially hollow, tapered and burr-free burner tube 20 is formed. See Figures 1, 2, 3 and 5. It will be understood by those of skill in the art that there are methods, other than the preferred method, of manufacturing tapered burner tube 20 and ports 30 consistent with the goals and objects of the present inventions.

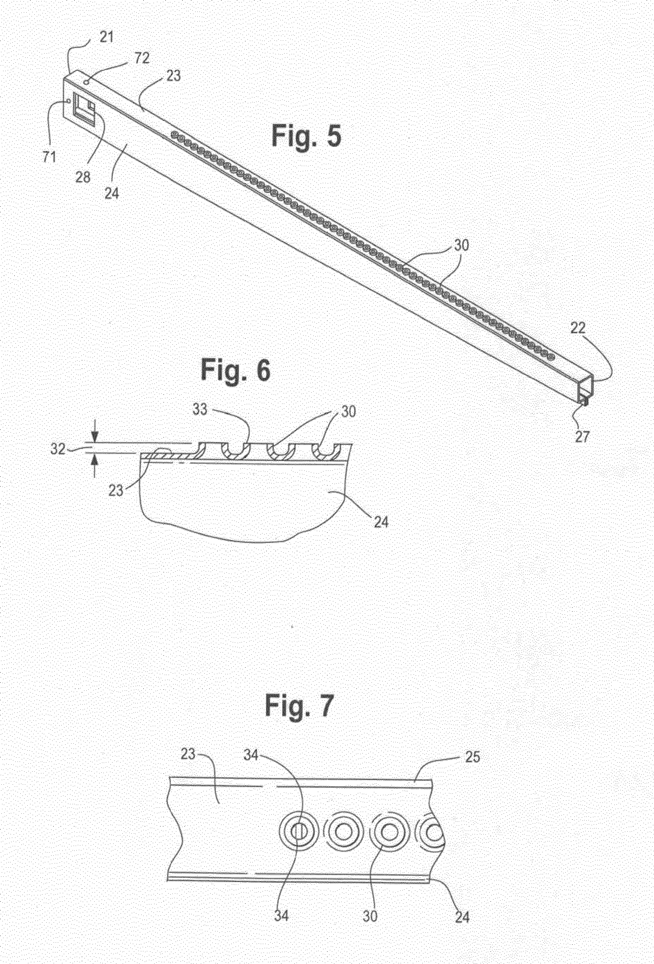

The preferred raised gas ports 30 of the present inventions may better be seen by reference to Figures 6 and 7. Each port 30 has a height 32 measured from the upper surface 23 with an opening 33 at the top of the height 32. Each opening 33 has a diameter 34. In the preferred embodiment, the openings 33 are circular. It will be understood by those of skill in the art that openings 33 may be another shape and that the dimensions discussed herein for diameter may be readily converted to area if, for example, square or rectangular openings are used. Because the opening 33 of port 30 is raised above upper surface 23 of burner tube 20, the flame is also lifted above upper surface 23 of burner tube 20. This improves flame quality and reduces the temperature of tube 20 during grilling, which increases the life of the tube 20 and prevents corrosion and clogging of the port openings 33. It will be understood by those of skill in the art that ports 30 may alternatively be located on one or both side surfaces 24, 25. It will also be understood that non-rectangular shapes of burner tube 20 may also be used consistent with the present inventions.
Tests have shown that the ratio of port height 32 to port opening 33 diameter 34 is important to proper and efficient flame quality and burner tube 20 longevity. The ideal theoretical port height 32 to port opening 33 diameter 34 is 1:1. However, in practice, that ratio is unobtainable when cost effectively manufacturing a burner tube 20 of the present inventions. Since the ports 30 are typically formed from the material of upper surface 23, there is only so much material available to form the ports 30, as will be understood by those of skill in the art. In addition, tests have also shown that in burner tubes 20 sized for use in typical gas grills, the port opening 33 diameter 34 should not exceed 0.2794 centimeters (.110") to avoid flame pullback into burner tube 20. Thus, it has been determined that the maximum, reasonably feasible port height 32 is approximately 0.05080 centimeters and 0.15748 centimeters (.020" to .062"). And, the preferred port opening 33 diameter 34 is between approximately 0.1905 centimeters and 0.2794 centimeters (.075" and .110"). In the preferred embodiment, the port height 32 to opening diameter 34 ratio is approximately .645. This preferred ratio is achieved using a preferred port height 32 of 0.152 centimeters (.060") and a preferred port opening diameter 34 of 0.23622 centimeters (.093"). This preferred configuration, along with the taper of burner tube 20, provides the best flame quality, reduces clogging and extends the life of the burner tube 20.

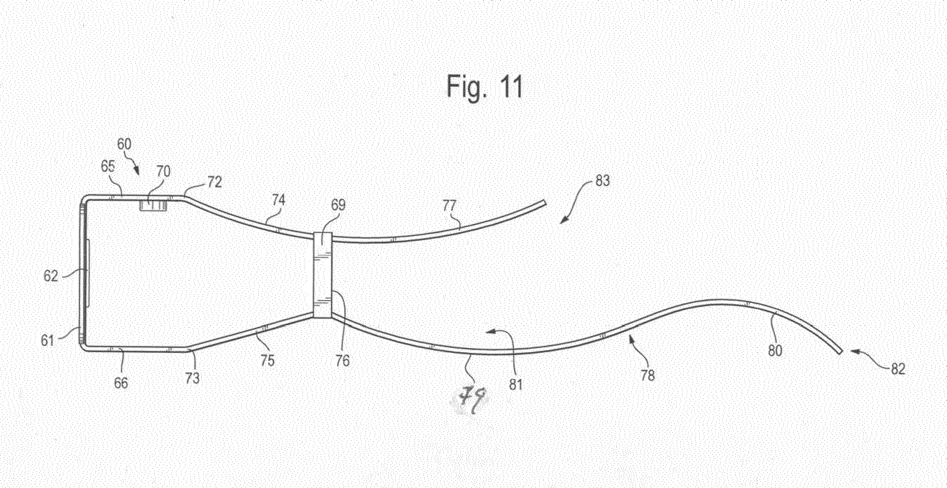

An alternative embodiment of a venturi member 60 may be seen by reference to Figure 8. The embodiment of Figure 8 does not fall within the scope of the appended claims. Venturi member 60 includes a front face 61 having an opening 62 to accommodate the neck of a typical gas valve (not shown). A rearwardly projecting side tab 63 having a hole 64 is also provided on each side of front face 61. A top flange 65 and a bottom flange 66 project rearward of face 61. Top flange 65 includes a v-shaped portion having an apex 67. Similarly, bottom flange 66 includes an inverted v-shaped portion having an apex 68. As can be seen in Figure 8, the space between the top and bottom flanges 65 and 66 becomes constricted, forming what is commonly known as a throat or throat area (76 in Figures 10 and 11), where the two opposing apexes 67 and 68 converge. A stabilizer brace 69 is provided at the rear of the member to support the upper and lower flanges 65 and 66 and maintain their spacing when installed into the open end 21 of burner tube 20. A hole 70 may be provided on upper flange 65 near the front in order to accommodate a screw used to secure air shutter 50 to the burner tube 20 (see Figures 2 and 9), as hereinafter described.

As shown in Figures 1 and 2, venturi member 60 is inserted into the open end 21 of burner tube 20. It may be affixed to the burner tube 20 using a screw (not shown) through hole 64 of tab 63 into holes 71 in the sides 24, 25 of burner tube 20. It will be understood that other means may be used to attach venturi member 60 to burner tube 20. When inserted into burner tube 20, the neck of a typical gas valve (not shown) is inserted into opening 62. As the fuel/air mixture passes between the space between upper apex 67 and lower apex 68, its velocity is increased. It will be understood by those of skill in the art that venturi member 60 is shaped and sized to fit within the open end 21 and coincides with the cross-sectional shape of burner tube 20.

A preferred embodiment of venturi member 60 may be seen by reference to Figures 10, 11 and 12. Like the above described alternative venturi member 60, preferred venturi member 60 includes a front face 61 having an opening 62 to accommodate the neck of a typical gas valve (not shown). A top flange 65 and a bottom flange 66 are also provided. A hole 70 may be provided on top flange 65 which may be used to secure venturi member 60 and/or air shutter 50 to burner tube 20. Although not shown in Figures 10 and 11, side tabs 63 (see Figure 8) may be provided on the preferred embodiment if desired as a means of attachment to the burner tube 20.

The top flange 65 and bottom flange 66 of preferred venturi member 60 are generally parallel to each other in the portion of venturi member 60 that receives the gas from the gas nozzle (not shown) and where it is attached to open end 21 of burner tube 20. Top flange 65 extends rearwardly from face 61 to a top transition point 72. Similarly, bottom flange 66 extends rearwardly to a bottom transition point 73.

Extending rearwardly from top transition point 72 is a top constricting flange 74. Top constricting flange 74 extends downwardly from top transition point 72. Top constricting flange 74 may be straight or slightly curvilinear as shown in Figures 10 and 11. Similarly, extending rearwardly from bottom transition point 73 is an upwardly sloping bottom constricting flange 75. Top constricting flange 74 and bottom constricting flange 75 converge at throat area 76. Throat area 76 of preferred venturi member 60 forms the narrowest space in venturi member 60 and is roughly the equivalent of the space between v-shaped top apex 67 and inverted v-shaped bottom apex 68 of the embodiment as shown in Figure 8. Throat region 76 accelerates and helps mix the gas and air introduced into burner tube 20. A stabilizer brace 69 may also be provided.

Extending rearwardly of top constricting flange 74 and beginning at approximately throat area 76 is an upper arcuate portion 77. Upper arcuate portion 77 is generally concave and terminates at a height approximately equivalent in height to top flange 65. Upper arcuate portion 77 serves to, among other things, occupy the space near the top of the burner tube 20 where undesirable turbulence could form near the gas ports 30. Extending rearwardly from bottom constricting flange 75 and beginning at approximately throat area 76 is a lower arcuate portion 78. Lower arcuate portion 78 includes a concave portion 79 and a convex portion 80. As shown in Figure 11, lower arcuate portion 78 transitions smoothly in an undulating fashion between concave portion 79 and convex portion 80. Lower arcuate portion 78 terminates at a point roughly equivalent in height to bottom flange 66.

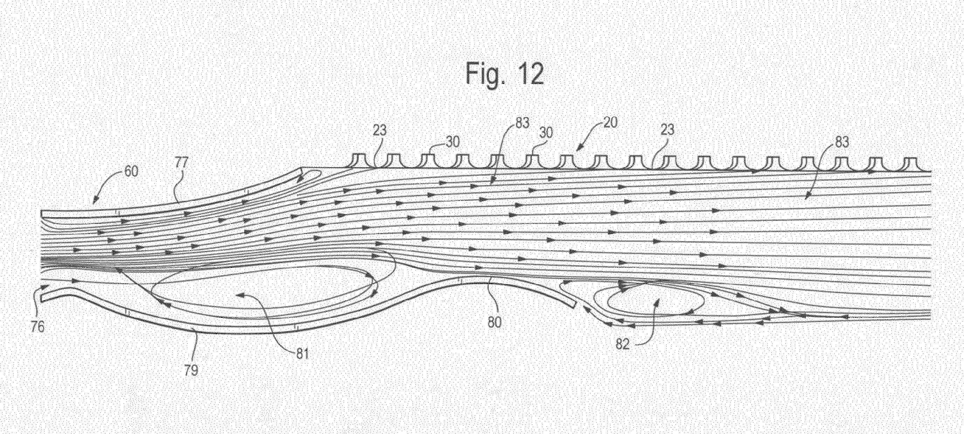

As shown in Figures 11 and 12, the concave portion 79 of lower arcuate portion 78 forms a first area of turbulence 81. A second area of turbulence 82 is created after convex portion 80 of lower arcuate portion 78. The end of convex portion 80 roughly coincides with the bottom 26 of burner tube 20. The unique shape of upper arcuate portion 77 occupies the space at the top of burner tube 20 where undesired turbulence may most likely occur. Lower arcuate portion 78 creates what is commonly known as a coanda effect at the bottom 26 of burner tube 20. Specifically, as the gas/air mixture is accelerated and leaves throat area 76, turbulence is created in the first 81 and second 82 areas of turbulence (see Figure 12). The smooth, undulating lower arcuate portion creates the desired coanda effect in the first and second areas of turbulence 81/82. The areas of turbulence 81/82 are created at the bottom portion of burner tube 20 such that an area of smooth flow 83 is created in the upper portion of burner tube 20 adjacent to the gas ports 30 (see Figure 12). This creates smooth and uniform flow at gas ports 30, creating better, more stable and uniform flows resulting in better flame consistency along the length of the burner tube 20. It also provides for better ignition (see Figure 12).

It will be understood by those of skill in the art that the length of smoothly curved arcs in lower arcuate portion 78, as well as their curvature, may be adjusted depending upon, among other things, the volume of the burner tube 20, the length of burner tube 20 and the arrangement of the gas ports 30. In addition, if desired, additional concave 79 and convex 80 portions may be provided by extending the length of lower arcuate portion 78 along the length of burner tube 20. It has been determined, however, that two such portions are effective in creating the desired coanda effect in burner tube 20 of the size, configuration and volume typically used in grilling applications. In addition, it will be understood by those of skill in the art that the above described arcuate portions of upper 77 and lower 78 arcuate portions may be formed from a single piece of material or may be separate pieces of material attached together, such as by welding.

A preferred air shutter 50 of the present inventions may be seen by reference to Figure 9. As will be understood by those of skill in the art, air shutter 50 cooperates with the window 28 at the open end 21 of burner tube 20 to permit adjustment of the combustion air to fuel mixture. Preferred shutter 50 includes a top 51 having a slot 52 which is used to secure shutter 50 through hole 72 to burner tube 20 once in the proper position for the desired mixture. Shutter 50 includes two sides 53, each having a recess 54 and two bottom sections 55. It will be understood by those of skill in the art that a space between bottom members 55 is provided to accommodate tab 27 on the bottom of burner tube 20 that is part of a preferred manufacturing process. The recesses 54 of sides 53 accommodate the attachment flanges 63 of venturi member 60 when it is attached to burner tube 20.

When in use, the neck of a gas valve is inserted into opening 62 of venturi member 60 with the open end of burner tube 20 typically at the front of the grill. The closed end 22 of burner tube 20 is movably secured to a rear of the grill and the open end slidingly connected to the valve neck by the air shutter 50. In this manner, tube 20 may expand and contract as necessary during use. The gas is injected into venturi member 60 and mixed with the desired amount of combustion air using air shutter 50. The velocity of the fuel/air mixture is accelerated by the venturi member 60 (and in particular throat area 76 of the preferred embodiment of venturi member 60 and between v-shaped apex 67 and inverted v-shaped apex 68 of the venturi 60 embodiment of Figure 8) and flows down the length of burner tube 20. Because of the taper of burner tube 20, the pressure throughout the length of the tube 20 is relatively constant. And, because of the unique configuration of preferred venturi member 60 (see Figures 10 and 11), smooth and stable flow 83 along the top of burner tube 20 adjacent to ports 30 is created (see Figure 12).

When lit, the flame sits on top of the raised gas ports 30 at the opening 33. Since the flame is lifted off of the upper surface 23 of burner tube 20, the burner tube 20 remains cooler. This results in less port 30 clogging and less corrosion of the burner tube 20. In this manner, a longer life of burner tube 20 and high flame quality may be achieved. In addition, when the preferred port height 32 to port opening 33 diameter 34 is used, flame quality is further increased.

The above description is not intended to limit the meaning of the words used in or the scope of the following claims that define the invention. Rather, it is contemplated that future modifications in structure, function or result will exist that are not substantial changes and that all such insubstantial changes in what is claimed are intended to be covered by the claims. Thus, while preferred embodiments of the present inventions have been illustrated and described, it will be understood that changes and modifications can be made without departing from the claimed invention. In addition, although the term "claimed invention" or "present invention" is sometimes used herein in the singular, it will be understood that there are a plurality of inventions as described and claimed.

Various features of the present inventions are set forth in the following claims.

## Claims

1. A venturi member (60) for use in a burner tube (20) for a gas grill, the burner tube (20) having a length, a top (23) with gas ports (30) and a bottom (26), the venturi member (60) having a front face (61) having a top (65) and a bottom (66), the front face (61) including an opening (62) to accommodate a neck of a gas valve, a top flange (65) extending rearwardly from the top of the front face (61) and a substantially parallel bottom flange (66) extending rearwardly from the bottom of the front face (61), and a downwardly sloping top constricting flange (74) extending rearwardly from the top flange (65) and an upwardly sloping bottom constricting flange (75) extending rearwardly from the bottom flange (66), the top constricting flange (74) and bottom constricting flange (75) converging to form a throat area (76),
**characterised in that** the venturi member (60) further comprises:
an upper arcuate portion (77) extending rearwardly from the top constricting flange (74); and,
a lower arcuate portion (78) extending rearwardly from the bottom constricting flange (75).

2. The venturi member (60) of claim 1 wherein the upper arcuate portion (77) has a concave shape generally adjacent to the top (23) of the burner tube (20).

3. The venturi member (60) of claim 1 wherein the lower arcuate portion (78) has a concave portion (79) and a convex portion (80) generally adjacent to the bottom (26) of the burner tube (20).

4. The venturi member (60) of claim 2 wherein the lower arcuate portion (78) has a concave portion (79) and a convex portion (80) generally adjacent to the bottom (26) of the burner tube (20).

5. The venturi member (60) of claim 2 wherein the upper arcuate portion (77) occupies the space where turbulence may form along the top (23) of the burner tube (20) and adjacent to the gas ports (30).

6. The venturi member (60) of claim 3 wherein a first turbulence area (81) is created in the concave portion (79) of the lower arcuate portion (78) and a second turbulence area (82) is created adjacent to the end of the convex portion (80) of the lower arcuate portion (78).

7. The venturi member (60) of claim 4 wherein the upper arcuate portion (77) occupies the space where turbulence may form at the top of the burner tube (20) adjacent to the gas ports (30) and a first turbulence area (81) is created in the concave portion (79) of the lower arcuate portion (78) and a second turbulence area (82) is created adjacent to the end of the convex portion (80) of the lower arcuate portion (78).

8. The venturi member (60) of claim 1 wherein the top constricting flange (74) is arcuate.

9. A burner assembly (10) for use in a gas grill, comprising a venturi member (60) according to any of claims 1-8 and further comprising:
a tapered burner tube (20) having an open end (21), a closed end (22) and a substantially hollow and smooth interior which is free of burrs or other obstructions and an upper surface (23), the upper surface (23) including a plurality of gas ports (30) having a height (32) projecting above the upper surface (23) and an opening (33) at the top of the height (32), the opening (33) having a diameter (34);
a venturi member (60) at the open end (21) of the burner tube (20);
wherein the upper arcuate portion (74) of the venturi member (60) has a concave shape generally adjacent to the top (23) of the burner tube (20); and,
wherein the lower arcuate portion (28) of the venturi member (60) has a concave portion (79) and a convex portion (80) generally adjacent to the bottom (26) of the burner tube (20).

10. The burner assembly (10) of claim 9 wherein the gas port (30) height (32) is between approximately 0.0508 centimeters and 0.15748 centimeters (0.020 inches and 0.062 inches) and the gas port (20) opening (33) diameter (34) is between approximately 0.1905 centimeters and 0.2794 centimeters (0.075 inches and 0.110 inches).

11. The burner assembly (10) of claim 9 wherein a ratio of gas port (30) height (32) to gas port (30) opening (33) diameter (34) is between approximately 1.625 centimeters and 1.6510 centimeters (0.640 inches and 0.650 inches).

12. The burner assembly (10) of claim 11 wherein the gas port (30) height (32) to gas port (30) opening (33) diameter (34) ratio is greater than 0.5.

13. The burner assembly (10) of claim 9 wherein the height (32) of the gas ports (30) is between 0.05080 centimeters and 0.15748 centimeters (0.020 inches and 0.062 inches) and the area of the gas port (30) opening (33) is between 0.0387096 square centimeters and 0.0516128 square centimeters (0.006 square inches and 0.008 square inches).

14. The burner assembly (10) of claim 9 wherein an air shutter (50) is provided that cooperates with the open end (21) of the burner tube (20) to permit adjustment of the fuel and air mixture going into the burner tube (20).

## Patentansprüche

1. Lufttrichterelement (60) zur Verwendung in einem Brennerrohr (20) für einen Gasgrill, wobei das Brennerrohr (20) eine Länge, eine Oberseite (23) mit Gasanschlüssen (30) und eine Unterseite (26) aufweist, wobei das Lufttrichterelement (60) eine vordere Fläche (61) aufweist, die eine Oberseite (65) und eine Unterseite (66) aufweist, wobei die vordere Fläche (61) eine Öffnung (62), um einen Hals eines Gasventils aufzunehmen, einen oberen Flansch (65), der sich von der Oberseite der vorderen Fläche (61) nach hinten erstreckt, und einen im Wesentlichen parallelen unteren Flansch (66) beinhaltet, der sich von der Unterseite der vorderen Fläche (61) nach hinten erstreckt, wobei sich ein nach unten geneigter oberer verengter Flansch (74) von dem oberen Flansch (65) nach hinten erstreckt und sich ein nach oben geneigter unterer verengter Flansch (75) von dem unteren Flansch (66) nach hinten erstreckt, wobei der obere verengte Flansch (74) und der untere verengte Flansche (75) zusammenlaufen, um eine Halsregion (76) zu bilden,
**dadurch gekennzeichnet, dass** das Lufttrichterelement (60) ferner Folgendes umfasst:
einen oberen gekrümmten Abschnitt (77), der sich von dem oberen verengten Flansch (74) nach hinten erstreckt; und
einen unteren gekrümmten Abschnitt (78), der sich von dem unteren verengten Flansch (75) nach hinten erstreckt.

2. Lufttrichterelement (60) nach Anspruch 1, wobei der obere gekrümmte Abschnitt (77) eine konkave Form im Allgemeinen benachbart zu der Oberseite (23) des Brennerrohrs (20) aufweist.

3. Lufttrichterelement (60) nach Anspruch 1, wobei der untere gekrümmte Abschnitt (78) einen konkaven Abschnitt (79) und einen konvexen Abschnitt (80) im Allgemeinen benachbart zu der Unterseite (26) des Brennerrohrs (20) aufweist.

4. Lufttrichterelement (60) nach Anspruch 2, wobei der untere gekrümmte Abschnitt (78) einen konkaven Abschnitt (79) und einen konvexen Abschnitt (80) im Allgemeinen benachbart zu der Unterseite (26) des Brennerrohrs (20) aufweist.

5. Lufttrichterelement (60) nach Anspruch 2, wobei der obere gekrümmte Abschnitt (77) den Raum einnimmt, in dem sich eine Turbulenz entlang der Oberseite (23) des Brennerrohrs (20) und benachbart zu den Gasanschlüssen (30) bilden kann.

6. Lufttrichterelement (60) nach Anspruch 3, wobei ein erster Turbulenzbereich (81) in dem konkaven Abschnitt (79) des unteren gekrümmten Abschnitts (78) erzeugt wird und ein zweiter Turbulenzbereich (82) benachbart zu dem Ende des konvexen Abschnitts (80) des unteren gekrümmten Abschnitts (78) erzeugt wird.

7. Lufttrichterelement (60) nach Anspruch 4, wobei der obere gekrümmte Abschnitt (77) den Raum einnimmt, in dem sich eine Turbulenz an der Oberseite des Brennerrohrs (20) und benachbart zu den Gasanschlüssen (30) bilden kann, und ein erster Turbulenzbereich (81) in dem konkaven Abschnitt (79) des unteren gekrümmten Abschnitts (78) erzeugt wird und ein zweiter Turbulenzbereich (82) benachbart zu dem Ende des konvexen Abschnitts (80) des unteren gekrümmten Abschnitts (78) erzeugt wird.

8. Lufttrichterelement (60) nach Anspruch 1, wobei der obere verengte Flansch (74) gekrümmt ist.

9. Brenneranordnung (10) zur Verwendung in einem Gasgrill, umfassend ein Lufttrichterelement (60) nach einem der Ansprüche 1-8 und ferner umfassend:
ein abgeschrägtes Brennerrohr (20), das ein offenes Ende (21), ein geschlossenes Ende (22) und einen im Wesentlichen hohlen und glatten Innenraum, der frei von Graten und anderen Hindernissen ist, und eine Oberfläche (23) aufweist, wobei die Oberfläche (23) eine Vielzahl von Gasanschlüssen (30) beinhaltet, die eine Höhe (32), die über die Oberfläche (23) vorsteht, und eine Öffnung (33) oben an der Höhe (32) aufweisen, wobei die Öffnung (33) einen Durchmesser (34) aufweist;
ein Lufttrichterelement (60) an dem offenen Ende (21) des Brennerrohrs (20);
wobei der obere gekrümmte Abschnitt (74) des Lufttrichterelements (60) eine konkave Form im Allgemeinen benachbart zu der Oberseite (23) des Brennerrohrs (20) aufweist; und
wobei der untere gekrümmte Abschnitt (28) des Lufttrichterelements (60) einen konkaven Abschnitt (79) und einen konvexen Abschnitt (80) im Allgemeinen benachbart zu der Unterseite (26) des Brennerrohrs (20) aufweist.

10. Brenneranordnung (10) nach Anspruch 9, wobei die Höhe (32) des Gasanschlusses (30) zwischen ungefähr 0,0508 Zentimetern und 0,15748 Zentimetern (0,020 Zoll und 0,062 Zoll) liegt und der Durchmesser (34) der Öffnung (33) des Gasanschlusses (20) zwischen ungefähr 0,1905 Zentimetern und 0,2794 Zentimeter (0,075 Zoll und 0,110 Zoll) liegt.

11. Brenneranordnung (10) nach Anspruch 9, wobei ein Verhältnis der Höhe (32) des Gasanschlusses (30) zu dem Durchmesser (34) der Öffnung (33) des Gasanschlusses (30) zwischen ungefähr 1,625 Zentimetern und 1,6510 Zentimetern (0,640 Zoll und 0,650 Zoll) liegt.

12. Brenneranordnung (10) nach Anspruch 11, wobei das Verhältnis der Höhe (32) des Gasanschlusses (30) zu dem Durchmesser (34) der Öffnung (33) des Gasanschlusses (30) größer als 0,5 ist.

13. Brenneranordnung (10) nach Anspruch 9, wobei die Höhe (32) des Gasanschlusses (30) zwischen 0,05080 Zentimetern und 0,15748 Zentimetern (0,020 Zoll und 0,062 Zoll) liegt und die Fläche der Öffnung (33) des Gasanschlusses (30) zwischen 0,0387096 Quadratzentimetern und 0,0516128 Quadratzentimetern (0,006 Quadratzoll und 0,008 Quadratzoll) liegt.

14. Brenneranordnung (10) nach Anspruch 9, wobei eine Luftklappe (50) bereitgestellt ist, die mit dem offenen Ende (21) des Brennerrohrs (20) zusammenwirkt, um eine Einstellung des Brennstoff- und Luftgemisches, das in das Brennerrohr (20) eintritt, zu ermöglichen.

## Revendications

1. Élément venturi (60) destiné à être utilisé dans un tube de brûleur (20) pour un grill à gaz, le tube de brûleur (20) ayant une longueur, une partie supérieure (23) avec des orifices de gaz (30) et une partie inférieure (26), l'élément venturi (60) ayant une face avant (61) ayant un sommet (65) et un fond (66), la face avant (61) comportant une ouverture (62) pour recevoir un col d'un robinet de gaz, une bride supérieure (65) s'étendant vers l'arrière depuis le sommet de la face avant (61) et une bride inférieure (66) sensiblement parallèle s'étendant vers l'arrière depuis le fond de la face avant (61), et une bride d'étranglement supérieure (74) inclinée vers le bas s'étendant vers l'arrière depuis la bride supérieure (65) et une bride d'étranglement inférieure (75) inclinée vers le haut s'étendant vers l'arrière depuis la bride inférieure (66), la bride d'étranglement supérieure (74) et la bride d'étranglement inférieure (75) convergeant pour former une zone d'étranglement (76),
**caractérisé en ce que** l'élément venturi (60) comprend en outre :
une partie arquée supérieure (77) s'étendant vers l'arrière depuis la bride d'étranglement supérieure (74) ; et,
une partie arquée inférieure (78) s'étendant vers l'arrière depuis la bride d'étranglement inférieure (75).

2. Élément venturi (60) selon la revendication 1, dans lequel la partie arquée supérieure (77) a une forme concave généralement adjacente à la partie supérieure (23) du tube de brûleur (20).

3. Élément venturi (60) selon la revendication 1, dans lequel la partie arquée inférieure (78) a une partie concave (79) et une partie convexe (80) généralement adjacente à la partie inférieure (26) du tube de brûleur (20).

4. Élément venturi (60) selon la revendication 2, dans lequel la partie arquée inférieure (78) a une partie concave (79) et une partie convexe (80) généralement adjacente à la partie inférieure (26) du tube de brûleur (20).

5. Élément venturi (60) selon la revendication 2, dans lequel la partie arquée supérieure (77) occupe l'espace où une turbulence peut se former le long de la partie supérieure (23) du tube de brûleur (20) et de manière adjacente aux orifices de gaz (30) .

6. Élément venturi (60) selon la revendication 3, dans lequel une première zone de turbulence (81) est créée dans la partie concave (79) de la partie arquée inférieure (78) et une seconde zone de turbulence (82) est créée de manière adjacente à l'extrémité de la partie convexe (80) de la partie arquée inférieure (78).

7. Élément venturi (60) selon la revendication 4, dans lequel la partie arquée supérieure (77) occupe l'espace où une turbulence peut se former au niveau de la partie supérieure du tube de brûleur (20) de manière adjacente aux orifices de gaz (30) et une première zone de turbulence (81) est créée dans la partie concave (79) de la partie arquée inférieure (78) et une seconde zone de turbulence (82) est créée de manière adjacente à l'extrémité de la partie convexe (80) de la partie arquée inférieure (78).

8. Élément venturi (60) selon la revendication 1, dans lequel la bride d'étranglement supérieure (74) est arquée.

9. Ensemble de brûleur (10) destiné à être utilisé dans un grill à gaz, comprenant un élément venturi (60) selon l'une quelconque des revendications 1 à 8 et comprenant en outre :
un tube de brûleur (20) conique ayant une extrémité ouverte (21), une extrémité fermée (22) et un intérieur sensiblement creux et lisse qui est exempt de bavures ou d'autres obstructions et une surface supérieure (23), la surface supérieure (23) comportant une pluralité d'orifices de gaz (30) ayant une hauteur (32) faisant saillie au-dessus de la surface supérieure (23) et une ouverture (33) au niveau de la partie supérieure de la hauteur (32), l'ouverture (33) ayant un diamètre (34) ;
un élément venturi (60) au niveau de l'extrémité ouverte (21) du tube de brûleur (20) ;
dans lequel la partie arquée supérieure (74) de l'élément venturi (60) a une forme concave généralement adjacente à la partie supérieure (23) du tube de brûleur (20) ; et,
dans lequel la partie arquée inférieure (28) de l'élément venturi (60) a une partie concave (79) et une partie convexe (80) généralement adjacente à la partie inférieure (26) du tube de brûleur (20).

10. Ensemble de brûleur (10) selon la revendication 9, dans lequel la hauteur (32) de l'orifice de gaz (30) est comprise entre environ 0,0508 centimètre et 0,15748 centimètre (0,020 pouce et 0,062 pouce) et le diamètre (34) de l'ouverture (33) de l'orifice de gaz (20) est compris entre environ 0,1905 centimètre et 0,2794 centimètre (0,075 pouce et 0,110 pouce).

11. Ensemble de brûleur (10) selon la revendication 9, dans lequel un rapport de la hauteur (32) de l'orifice de gaz (30) au diamètre (34) de l'ouverture (33) de l'orifice de gaz (30) est compris entre environ 1,625 centimètre et 1,6510 centimètre (0,640 pouce et 0,650 pouce).

12. Ensemble de brûleur (10) selon la revendication 11, dans lequel le rapport de la hauteur (32) de l'orifice de gaz (30) au diamètre (34) de l'ouverture (33) de l'orifice de gaz (30) est supérieur à 0,5.

13. Ensemble de brûleur (10) selon la revendication 9, dans lequel la hauteur (32) des orifices de gaz (30) est comprise entre 0,05080 centimètre et 0,15748 centimètre (0,020 pouce et 0,062 pouce) et la zone de l'ouverture (33) de l'orifice de gaz (30) est comprise entre 0,0387096 centimètre carré et 0,0516128 centimètre carré (0,006 pouce carré et 0,008 pouce carré) .

14. Ensemble de brûleur (10) selon la revendication 9, dans lequel un obturateur d'air (50) est prévu qui coopère avec l'extrémité ouverte (21) du tube de brûleur (20) pour permettre l'ajustement du mélange de carburant et d'air entrant dans le tube de brûleur (20).
